# FASCICULE DE BREVET EUROPEEN

(11) **EP 3 395 626 B1**
(45) Date de publication et mention de la délivrance du brevet: **04.12.2024**
(21) Numéro de dépôt: 18167190.0
(22) Date de dépôt: 13.04.2018
(51) Int. Cl.: B60S 1/08, B60S 1/52, B08B 3/02

(54) **DISPOSITIF DE NETTOYAGE TÉLESCOPIQUE**
TELESKOPREINIGUNGSVORRICHTUNG
TELESCOPIC CLEANING DEVICE

(30) Priorité: 25.04.2017 FR 1753576
(43) Date de publication de la demande: 31.10.2018
(73) Titulaire: Valeo Systèmes d'Essuyage, 78322 Le Mesnil Saint Denis (FR)
(72) Inventeur: PICOT, Philippe, 63500 ISSOIRE (FR); VIEILLE, Jordan, 63500 ISSOIRE (FR); ROLLET, Sébastien, 63500 ISSOIRE (FR); KOLANOWSKI, Grégory, 63500 ISSOIRE (FR); GRASSO, Giuseppe, 63500 ISSOIRE (FR); BOUSSET, Xavier, 63500 ISSOIRE (FR); BAUDOUIN, Maxime, 63500 ISSOIRE (FR)
(74) Mandataire: Valeo Visibility

(56) Documents cités:
- EP-A1- 3 121 070
- DE-A1- 102009 006 280
- DE-C1- 4 237 856

## Description

La présente invention se rapporte au domaine des systèmes de détection optique destinés à équiper un véhicule automobile. Elle concerne plus particulièrement les dispositifs de nettoyage destinés à projeter au moins un fluide de nettoyage ou de séchage vers une surface optique à nettoyer d'un capteur optique d'un tel système de détection.

On appelle système de détection optique tout système comportant des capteurs optiques tels que des caméras, des capteurs laser ou autres capteurs basés sur l'émission et/ou la détection de la lumière dans le spectre visible ou invisible pour l'Homme, en particulier l'infrarouge.

De tels systèmes de détection ont pour fonction de recueillir des informations sur l'environnement du véhicule automobile, afin de fournir au conducteur une aide à la conduite et/ou à la manoeuvre de ce véhicule. Pour que cette aide soit efficace, les données fournies par le système de détection optique doivent être de la meilleure qualité possible, et il est donc indispensable de disposer de capteurs propres pour réaliser ces acquisitions de données. Pour ce faire, un dispositif de nettoyage peut être commandé pour projeter, sur une surface optique d'un capteur du système de détection optique (par exemple la lentille d'une caméra de prise de vues), un ou plusieurs fluides de nettoyage et/ou de séchage avant que soit réalisée la détection (par exemple la prise de vue). De tels dispositifs de nettoyage peuvent comporter au moins un corps d'acheminement de fluide formé d'une partie mobile, constituée d'un piston logé dans un cylindre de vérin, et apte à se déplacer d'une position de repos rétractée à une position de nettoyage déployée. Dans un tel mode de réalisation, le corps d'acheminement est habituellement raccordé, à son extrémité amont, et par l'intermédiaire d'un conduit d'alimentation flexible, à un réservoir de stockage du ou des fluides de nettoyage et/ou de séchage, et raccordé à son extrémité aval, opposée à son extrémité amont, à un dispositif de distribution et de projection du ou des fluides de nettoyage et/ou de séchage.

Il a été observé qu'il pouvait être souhaitable de procéder à un chauffage du fluide de nettoyage avant que celui-ci soit projeté sur la surface optique à nettoyer.

Un exemple de dispositif de nettoyage télescopique est décrit dans la publication référencée sous le numéro DE102009006280.

L'invention s'inscrit dans ce contexte et vise à proposer une amélioration des solutions existantes relatives aux dispositifs de nettoyage par projection d'un fluide de nettoyage chauffé sur une surface optique à nettoyer. L'invention a ainsi pour but de proposer un dispositif de nettoyage destiné à projeter au moins un fluide vers une surface à nettoyer d'un véhicule automobile, tel qu'une surface optique d'un capteur optique d'un système de détection optique qui, par un agencement compact et télescopique, permet de ne pas entraver le fonctionnement du capteur optique et qui, par l'agencement d'un dispositif chauffant, permet d'augmenter le pouvoir nettoyant du fluide projeté, de sorte que l'efficacité du nettoyage et du dégivrage de la surface optique à nettoyer sont améliorés.

L'invention a pour premier objet un dispositif de nettoyage télescopique destiné à projeter au moins un fluide de nettoyage et/ou de séchage vers une surface vitrée à nettoyer d'un véhicule automobile, telle qu'une surface optique d'un capteur optique d'un système de détection optique pour véhicule, ledit dispositif de nettoyage comprenant au moins un corps creux d'acheminement de fluide de nettoyage, fermé à une extrémité amont par une bride d'entrée et logeant un piston mobile configuré pour coulisser dans le corps creux d'acheminement, parallèlement à un axe d'allongement du corps creux, le piston mobile, creusé par un conduit intérieur de distribution, étant porteur à une extrémité aval d'un élément de distribution de fluide.

Selon l'invention, le corps creux d'acheminement loge en outre une tige qui s'étend en saillie de la bride d'entrée le long de l'axe d'allongement et autour de laquelle est apte à coulisser le piston mobile, le piston mobile et la tige étant configurés pour permettre entre eux, en fonction de la position du piston mobile par rapport à la tige, l'écoulement du fluide depuis la bride d'entrée jusqu'à l'élément de distribution, et un dispositif chauffant est ménagé sur la tige, ledit dispositif chauffant comportant au moins un élément chauffant s'étendant à l'intérieur d'un tube conducteur de chaleur, le long de l'axe d'allongement.

Par surface vitrée, ou surface optique, on comprend une surface transparente aux rayons électromagnétiques émis par un capteur optique, notamment dans le cadre d'une détection de distance d'un véhicule ou d'un objet au voisinage du véhicule équipé du dispositif de nettoyage selon l'invention.

Selon différentes caractéristiques de l'invention, prises seules ou en combinaison, on peut prévoir que :
- le tube conducteur de chaleur définit une enveloppe extérieure de la tige, le fluide s'écoulant entre la tige et le piston mobile étant amené à s'écouler contre la paroi extérieure du tube conducteur de chaleur ;
- l'élément chauffant s'étend à l'intérieur de la tige depuis la bride d'entrée ;
- l'élément chauffant s'étend jusqu'à l'extrémité libre de la tige opposée à la bride d'entrée ;
- l'élément chauffant est un fil résistif ;
- le fil résistif forme une boucle à l'intérieur du tube conducteur de chaleur ; la boucle peut notamment être au voisinage de l'extrémité libre de la tige opposée à la bride d'entrée ; le fil résistif peut notamment être agencé de manière à faire un aller/retour en forme de U ;
- la tige comporte un embout sensiblement cylindrique qui comporte des moyens de maintien de l'élément chauffant ; l'embout peut notamment être disposé à l'extrémité libre de la tige opposée à la bride d'entrée,
- une gorge périphérique est agencée sur la périphérie de l'embout pour accueillir un élément d'étanchéité ;
- l'embout est rendu solidaire d'une extrémité aval du tube conducteur de chaleur par sertissage ou vissage ou emmanchement ;
- un matériau de remplissage, notamment de type résine ou gel, est disposé au moins partiellement à l'intérieur du tube conducteur pour figer la position de l'élément chauffant ;
- le tube conducteur de chaleur est métallique, notamment en laiton ou en aluminium ;
- l'embout est en matière plastique.

Selon une série de caractéristiques de l'invention, on peut prévoir que :
- des canaux de passages sont ménagés dans la paroi intérieure du conduit de distribution du piston mobile, de manière à pouvoir piloter le débit d'écoulement du fluide de nettoyage dans le dispositif de nettoyage, depuis son entrée dans la chambre d'admission jusqu'à sa projection par l'élément de distribution ; ces canaux de passage peuvent être agencés parallèlement entre eux et autour de l'axe d'allongement du dispositif de nettoyage télescopique ;
- chaque canal de passage présente une dimension axiale (hauteur d'un canal dans la direction de l'axe longitudinal d'allongement du piston mobile) et/ou radiale (profondeur du canal dans l'épaisseur de la paroi intérieure du piston mobile) identique et/ou distincte de celle des canaux voisins ; on comprend que lorsque le piston mobile est en position extrême rétractée, chaque canal de passage est recouvert intégralement et de façon étanche par la tige de manière à bloquer l'écoulement de fluide de nettoyage tandis que, lorsque le piston mobile adopte une position intermédiaire jusqu'à atteindre sa position extrême déployé, au moins une extrémité d'un canal de passage est dégagée de manière à permettre l'écoulement du fluide de nettoyage depuis la chambre d'admission jusqu'à l'élément de distribution ;
- l'élément de distribution de fluide de nettoyage et/ou de séchage comporte une rampe de distribution, de forme sensiblement rectangulaire, qui s'étend symétriquement de part et d'autre de l'axe d'allongement du corps creux d'acheminement de fluide selon une direction transversale à celle dudit axe d'allongement ;
- la rampe de distribution est équipée d'un dispositif chauffant additionnel, indépendant du dispositif chauffant présent dans la tige, et constitué d'un fil chauffant additionnel distinct de l'élément chauffant logé dans la tige ; le fil chauffant additionnel est relié électriquement à une alimentation électrique par l'intermédiaire d'un connecteur ;

Selon une série de caractéristiques de l'invention, propres à la rampe de distribution, et qui peuvent donc être combinées aux caractéristiques relatives au corps creux d'acheminement et à l'agencement du dispositif chauffant dans la tige servant de moyen de guidage au piston mobile, on peut prévoir que :
- la rampe de distribution est constituée d'une première partie formant embase apte à être assemblée à une seconde partie formant couvercle de manière à définir un canal de distribution de fluide ;
- l'embase et le couvercle sont assemblés l'un à l'autre par soudage ;
- l'embase est rattachée au corps creux d'acheminement par une portion d'extrémité présentant une forme allongée, centrée sur l'axe d'allongement et qui prolonge sensiblement coaxialement le corps creux d'acheminement ;
- l'embase comporte, sur sa face interne, à savoir la face tournée vers le couvercle et participant à définir le canal de distribution de fluide, le fil chauffant additionnel du dispositif chauffant additionnel et une pluralité d'orifices de distribution de fluide répartis le long du canal de distribution de fluide ;
- l'embase comporte également, sur cette face interne, une pluralité de plots de maintien du fil chauffant additionnel, de manière à faire adopter au fil chauffant additionnel une trajectoire de forme sensiblement similaire à celle du canal de distribution de fluide ;
- la longueur du fil chauffant additionnel à l'extérieur de la rampe de distribution est ajustée de manière à permettre le déplacement du piston mobile du dispositif de nettoyage télescopique dans sa position extrême déployée ;
- au moins un orifice de passage, respectivement d'entrée et de sortie du fil chauffant additionnel, est ménagé dans l'embase de la rampe de distribution, par exemple à proximité de la portion d'extrémité, afin de permettre le passage du fil chauffant additionnel;
- un matériau de remplissage, de type résine ou gel, peut être ajouté sur la face amont de la portion de distribution pour assurer l'étanchéité entre l'embase, l'orifice de passage et le fil chauffant additionnel.

Selon d'autres caractéristiques de l'invention, qui peuvent le cas échéant venir en complément de l'une ou l'autre des caractéristiques précédemment listées, on peut prévoir que le dispositif de nettoyage comporte :
- un embout d'admission de fluide formé en saillie de la bride d'entrée et excentrée par rapport à l'axe d'allongement du dispositif de nettoyage sur lequel est centré le corps creux d'acheminement de fluide dans lequel il débouche ;
- des moyens élastiques de rappel en position, de préférence un ressort de compression, logés dans le corps creux d'acheminement pour porter contre le piston mobile, à l'opposé de la chambre d'admission, et pour tendre à rappeler en position extrême rétractée le piston mobile.

Un deuxième objet de l'invention concerne un système de détection optique destiné à équiper un véhicule automobile et comportant au moins un capteur optique muni d'une surface optique, le système de détection étant particulier en ce qu'il comporte un dispositif de nettoyage télescopique tel que décrit précédemment, destiné à projeter au moins un fluide de nettoyage et/ou de séchage vers de la surface optique.

Le dispositif de nettoyage comporte au moins une tige équipée d'un dispositif chauffant et il peut comporter le cas échéant une rampe de distribution de fluide équipée d'un dispositif chauffant additionnel indépendant du premier dispositif chauffant.

Avantageusement, le système de détection optique peut comporter, en amont du dispositif de nettoyage chauffant selon l'invention, un conduit chauffant d'acheminement de fluide à l'intérieur duquel s'étend un fil résistif relié à un connecteur.

Un troisième objet de l'invention concerne un véhicule automobile équipé d'au moins un système de détection optique équipé d'un dispositif de nettoyage tel que précédemment décrit, destiné à projeter au moins un fluide de nettoyage et/ou de séchage vers une surface vitrée à nettoyer d'un véhicule automobile, tel qu'une surface optique d'un capteur optique.

D'autres caractéristiques et avantages de l'invention apparaîtront plus clairement à la lecture de la description détaillée des modes de réalisation de l'invention, donnée ci-après à titre d'exemples illustratifs et non limitatifs et s'appuyant sur les figures annexées, dans lesquelles on a illustré le dispositif de nettoyage télescopique selon un aspect de l'invention, destiné à projeter au moins un fluide de nettoyage et/ou de séchage vers une surface vitrée à nettoyer d'un véhicule automobile, et parmi lesquelles :

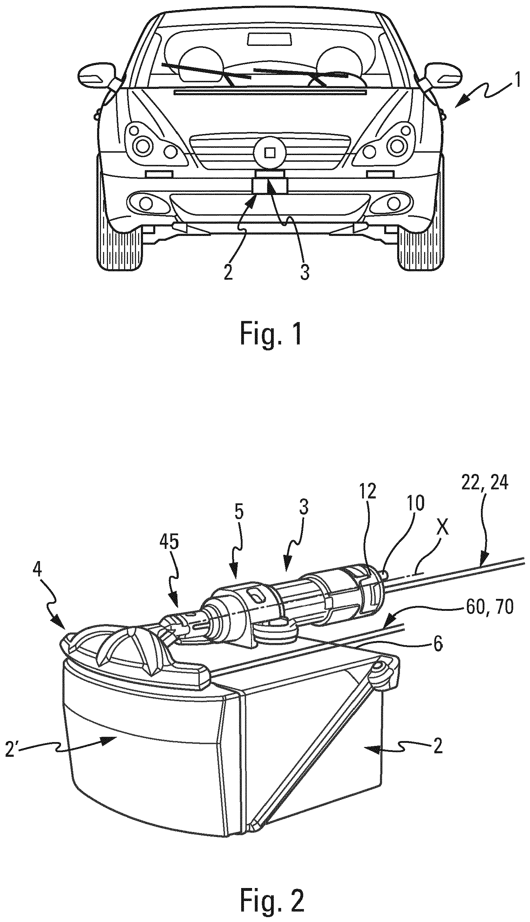

- la figure 1 est une vue de face d'un véhicule où est installé un système de détection comportant au moins un dispositif de nettoyage selon l'invention,
- la figure 2 est une vue schématique en perspective d'un mode de réalisation du dispositif de nettoyage et du capteur optique associé dans un agencement d'un système de détection selon l'invention, le dispositif de nettoyage comportant une rampe de distribution en bout d'un corps creux d'acheminement,

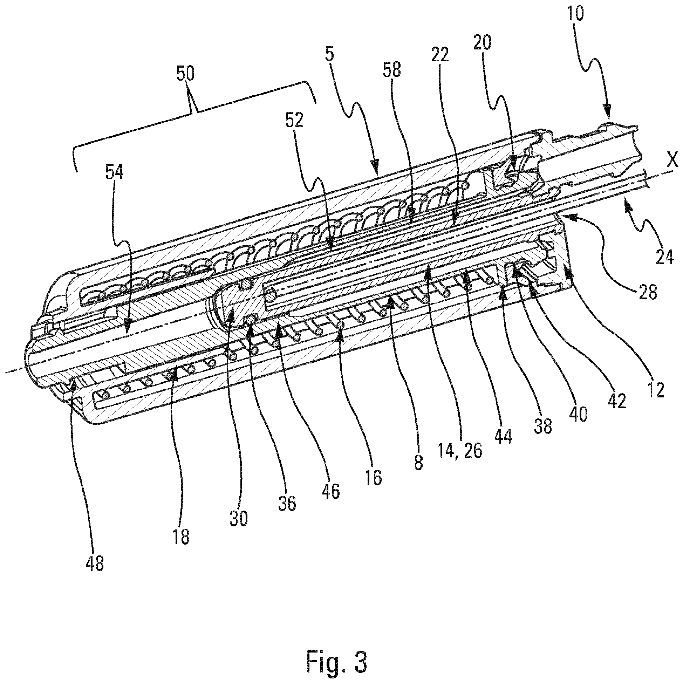

- la figure 3 est une vue en coupe, dans un plan de coupe comprenant l'axe longitudinal (X), d'une partie du dispositif de nettoyage selon l'invention présentant la coopération des éléments constitutifs dudit dispositif, plus particulièrement la coopération entre une tige, comportant un premier dispositif chauffant, et un piston mobile, représenté ici en position extrême rétractée ou position de repos, à l'intérieur du corps creux d'acheminement illustré sur la figure 2,

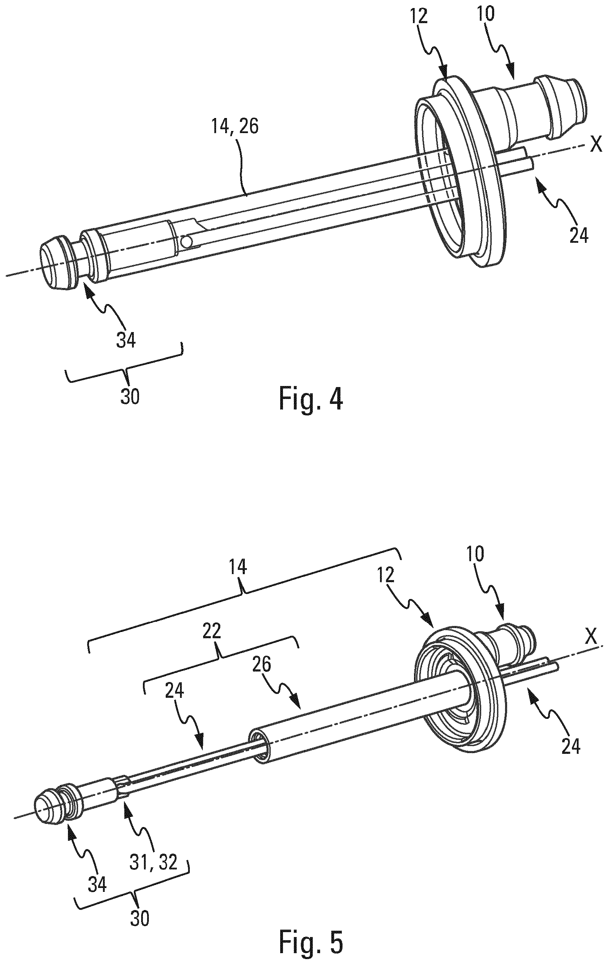

- les figures 4 et 5 sont des vues de la tige du dispositif de nettoyage télescopique selon l'invention comportant un premier dispositif chauffant, la figure 4 étant une vue dudit dispositif chauffant assemblé,

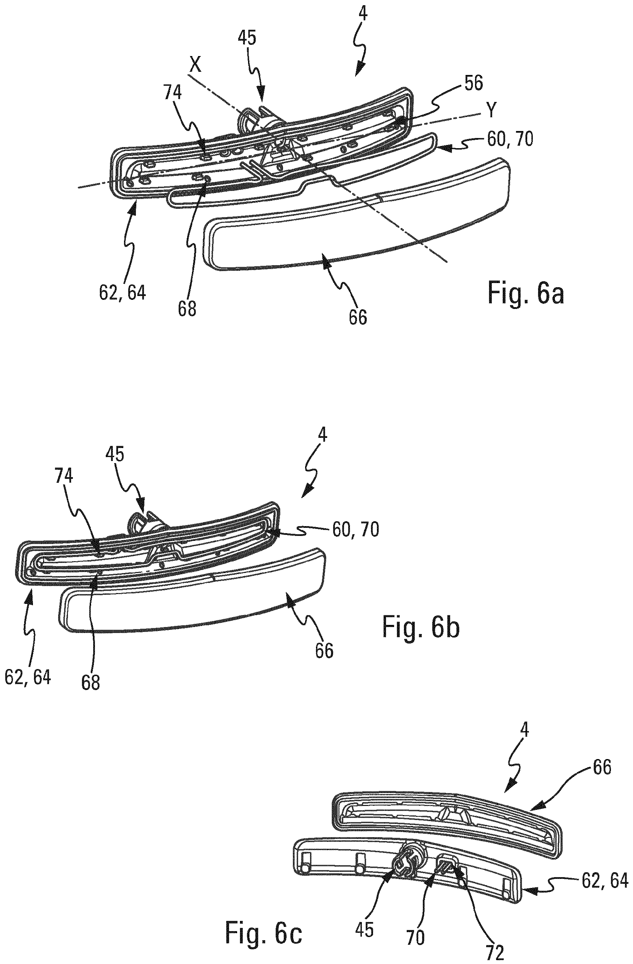

- les figures 6a, 6b, 6c sont des vues éclatées, respectivement avant (6a, 6b) et arrière (6c), de l'élément de distribution du dispositif de nettoyage selon l'invention dans un mode de réalisation préféré de l'invention où l'élément de distribution comporte une rampe de distribution dans laquelle est en particulier intégré un deuxième dispositif chauffant.

Il est tout d'abord à noter que si les figures exposent l'invention de manière détaillée pour sa mise en oeuvre, elles peuvent bien entendu servir à mieux définir l'invention le cas échéant. De même, il est rappelé que, pour l'ensemble des figures, les mêmes éléments sont désignés par les mêmes repères. On comprendra également que les modes de réalisation de l'invention illustrés par les figures sont données à titre d'exemple non limitatif. Par conséquent, d'autres configurations du dispositif de nettoyage selon l'invention peuvent être réalisées, notamment par variations de l'agencement et du dimensionnement des éléments constitutifs dudit dispositif de nettoyage selon l'invention, en particulier, de la tige, du piston et/ou de l'élément de distribution de fluide.

Il est également rappelé que, dans la description qui suit, les dénominations "amont" et "aval" se réfèrent à la direction d'écoulement du fluide dans le dispositif de nettoyage selon l'invention. Ainsi, la dénomination "amont" se réfère au côté du dispositif selon l'invention par lequel ce fluide est admis en son sein, et la dénomination "aval" se réfère au côté du dispositif selon l'invention par lequel le fluide est distribué à l'extérieur de celui-ci, vers une surface d'un capteur optique d'un ensemble de détection optique d'un véhicule automobile.

La figure 1 illustre un véhicule 1 comportant selon l'invention un ensemble de détection faisant partie d'un système d'aide à la conduite, cet ensemble de détection comportant ici en face avant du véhicule 1 un capteur optique 2 et un dispositif de nettoyage 3 selon l'invention. L'ensemble de détection est ici agencé sur la face avant du véhicule, notamment au niveau de la calandre.

La figure 2 illustre le dispositif de nettoyage 3, agencé au voisinage du capteur optique 2 et de sa surface optique 2' et qui comporte notamment un élément de distribution 4 de fluide, ici constitué d'une rampe de distribution, fixé, par une portion d'extrémité 45, à une extrémité aval d'un corps creux d'acheminement 5 qui présente une forme allongée selon un axe d'allongement X, le corps creux d'acheminement 5 étant fixé sur un boîtier 6 du capteur optique 2.

L'élément de distribution 4 est porté à l'extrémité d'un piston mobile 8 (visible sur la figure 3) configuré pour coulisser à l'intérieur du corps creux d'acheminement 5 entre une position déployée et une position rétractée, de sorte que l'élément de distribution 4 peut prendre en conséquence une position de nettoyage dans laquelle il se retrouve déployé en avant de la surface optique 2' à nettoyer, les buses de distribution de l'élément de distribution étant orientées de manière à ce que le fluide de nettoyage soit projeté sur la surface optique, et une position escamotée, visible sur la figure 2, dans laquelle l'élément de distribution est protégé et ne gêne pas la détection via le capteur optique 2.

La figure 3 représente l'intérieur du corps creux d'acheminement 5 et permet d'illustrer la coopération entre les éléments constitutifs dudit dispositif de nettoyage 3, télescopique du fait du déplacement du piston mobile 8.

Le dispositif de nettoyage télescopique 3 est constitué pour l'essentiel, de l'amont vers l'aval suivant un axe longitudinal (X) d'allongement du dispositif de nettoyage 3, d'un embout d'admission de fluide 10, d'une bride d'entrée 12, d'une tige 14 solidaire de la bride d'entrée 12, du piston mobile 8, d'un moyen élastique de rappel en position 16 et de l'élément de distribution 4 visible sur la figure 2. Chacun de ces composants est positionné par rapport au corps creux 5 d'acheminement de fluide, de révolution autour de l'axe d'allongement (X).

Le corps creux 5 d'acheminement de fluide est fermé à une extrémité amont par la bride d'entrée 12 et il est configuré pour loger le piston mobile 8, guidé en translation le long de l'axe d'allongement notamment au niveau d'un manchon de guidage 18 ménagé dans le corps creux 5 d'acheminement à l'extrémité aval.

L'embout d'admission de fluide 10 est formé en saillie de la bride d'entrée 12, et il s'étend à l'opposé du corps creux d'acheminement 5, en étant ici excentré par rapport à l'axe longitudinal (X) du corps creux 5 d'acheminement de fluide. L'embout d'admission 10 présente un alésage longitudinal traversant et débouchant à l'intérieur du corps creux 5 dans une chambre d'admission 20 délimitée au moins en partie par la bride d'entrée 12, une paroi périphérique du corps creux d'acheminement 5 et par le piston mobile 8.

La bride d'entrée 12 est configurée pour fermer l'extrémité amont du corps creux 5 d'acheminement de fluide. Un organe d'étanchéité peut être prévu au niveau de cette fermeture. La bride d'entrée est configurée pour supporter la tige 14 sur sa face interne, tournée vers l'intérieur du corps creux 5 d'acheminement de fluide.

La tige 14 s'étend en saillie de la bride d'entrée 12, à l'intérieur du corps creux 5 d'acheminement de fluide, de manière d'une part à former un organe de guidage en translation du piston mobile 8, qui est configuré pour coulisser autour de cette tige 14, et d'autre part à former une partie du dispositif d'entraînement en translation du piston mobile sous l'effet de la pression du fluide de nettoyage injecté dans le corps creux d'acheminement via l'embout d'admission de fluide 10. On saura décrire ci-après le fonctionnement du dispositif de nettoyage télescopique selon l'invention.

La tige 14 s'étend, le long de l'axe d'allongement X, en saillie de la bride d'entrée 12 et elle comporte selon l'invention un dispositif chauffant 22.

Le dispositif chauffant 22 comporte notamment un élément chauffant 24 et un tube cylindrique creux conducteur de chaleur 26 s'étendant le long de l'axe d'allongement X, l'élément chauffant 24 étant logé à l'intérieur du tube cylindrique creux conducteur de chaleur 26. L'élément chauffant présente dans l'exemple illustré la forme d'un fil résistif, sans que cela soit limitatif de l'invention dès lors que l'élément chauffant est logé, au moins partiellement, à l'intérieur du tube conducteur de chaleur.

Le tube conducteur de chaleur 26 définit l'enveloppe extérieure de la tige 14, et le fluide amené à s'écouler entre la tige et le piston mobile, lorsque la pression de fluide de nettoyage présent dans le corps creux d'acheminement est suffisante pour déplacer le piston mobile à l'encontre de la force de rappel du moyen élastique 16, s'écoule directement contre la paroi du tube conducteur de chaleur, de telle sorte que la chaleur dégagée au niveau de la paroi du tube sous l'effet de l'allumage de l'élément chauffant 24 est transmise directement au fluide de nettoyage traversant le piston mobile en direction de l'élément de distribution 4.

La tige 14 présente de la sorte une forme définie par le profil du tube conducteur de chaleur, à savoir ici une forme de tube creux cylindrique, à section annulaire, dont la face périphérique extérieure est lisse. La tige est ainsi creuse sur toute sa dimension le long de l'axe d'allongement, de sorte qu'un orifice de passage 28 est ménagé à la jonction du tube conducteur de chaleur 26 et de la bride d'entrée 12 pour laisser accès à l'intérieur de la tige 14.

A l'extrémité libre de la tige, c'est-à-dire l'extrémité opposée à la bride d'entrée, la tige est fermée par un embout 30, rapporté contre l'extrémité aval du tube conducteur de chaleur 26. L'embout 30 comporte des moyens de maintien 32 de l'élément chauffant 24, afin notamment d'assurer la tension du fil résistif formant ici l'élément chauffant et sa position sur toute la dimension d'allongement de la tige 14. On saura décrire ci-après d'autres caractéristiques propres à l'agencement de l'élément chauffant à l'intérieur de la tige 14 en décrivant plus en détail le montage de l'ensemble.

L'embout 30 comporte une gorge périphérique 34 apte à accueillir un joint torique d'étanchéité 36 de manière à permettre le coulissement étanche du piston 8 le long de ladite tige 14 qu'il entoure. Le joint torique d'étanchéité 36 est configuré pour prendre appui contre une face interne du piston mobile 8.

L'embout est ici réalisé en matière plastique, étant entendu que selon un aspect de l'invention, le tube conducteur de chaleur 26 est composé d'une matière métallique conductrice de chaleur, de préférence du laiton ou de l'aluminium, afin de transmettre la chaleur dégagée par l'élément chauffant 24 vers le fluide de nettoyage amené à passer le long de la face périphérique extérieure de la tige.

Le piston mobile 8 comporte, au voisinage de son extrémité amont tournée vers la bride d'entrée 12, une couronne 38 sur la paroi extérieure de laquelle est agencée une gorge périphérique 40, apte à accueillir un élément d'étanchéité 42 de manière à permettre le coulissement étanche du piston mobile 8 dans le corps creux 5 d'acheminement de fluide, et à s'assurer ainsi de la circulation du fluide vers l'intérieur du piston mobile 8, entre celui-ci et la tige 14. L'élément d'étanchéité 42 est de préférence un joint à lèvres, apte à limiter les frottements du piston mobile 8 dans le corps creux 5.

Le piston mobile 8 comporte des portions sensiblement cylindriques que l'on peut définir, de l'amont vers l'aval, comme étant une partie d'admission 44 portant la couronne 38, une partie centrale 46 apte à coulisser au sein du manchon de guidage 18 creux ménagé à l'extrémité aval du corps creux 5 d'acheminement et une partie terminale de distribution 48, de diamètre moindre.

Le piston mobile 8 est creusé par un conduit intérieur de distribution 50 du fluide de nettoyage comportant, à son extrémité amont, une portion supérieure 52 élargie qui permet le coulissement du piston mobile 8 autour de la tige 14 et, à son extrémité aval, une portion inférieure 54 de diamètre moindre, qui permet de mettre sous pression le fluide de nettoyage amené à circuler à l'intérieur du piston mobile 8 en vue de sa projection en sortie de l'élément de distribution 4 sur le capteur optique 2.

Le piston mobile 8 est connecté, par la partie terminale 48 de distribution de fluide, à l'élément de distribution 4 de fluide de nettoyage constitué, selon un mode de réalisation préféré de l'invention illustré sur la figure 2, d'une rampe de distribution 4 fixée à une extrémité aval du corps creux d'acheminement 5 de fluide, c'est-à-dire à la partie terminale 48 de distribution de fluide du piston mobile 8, par une portion d'extrémité 45. Plus particulièrement, la partie terminale 48 de distribution de fluide du piston mobile 8 est agencée pour que la portion inférieure 54 du conduit de distribution 50 ménagé dans le piston 8 puisse communiquer avec un canal de distribution 56 de fluide de l'élément de distribution 4, en particulier de la rampe de distribution, tel que visible sur les figures 6a à 6c.

Le piston mobile 8 est monté dans le corps creux 5 autour de la tige 14 qui s'étend sensiblement coaxialement au piston mobile 8, de manière à ce qu'au moins l'embout 30 formant l'extrémité libre de la tige 14 s'étende à l'intérieur du conduit intérieur de distribution 50 du piston mobile 8. Le piston mobile 8 coulisse dans le corps creux d'acheminement 5 entre une position extrême rétractée, ou position de repos et une position extrême déployée, ou position de nettoyage, sous l'effet de pression du fluide de nettoyage arrivant dans la chambre d'admission 20 via l'embout d'admission 10. Un moyen élastique de rappel en position 16, de préférence un ressort hélicoïdal de compression, est agencé dans le corps creux d'acheminement 5 entre la paroi périphérique du corps creux et le piston mobile 8, de manière à prendre appui à une extrémité sur le fond du corps creux 5, autour du manchon de guidage 18 et à l'extrémité opposée sur une face de la couronne 38. Le moyen élastique de rappel en position 16 est apte à se déformer sous l'effet de la pression du fluide de manière à autoriser le déplacement longitudinal du piston mobile 8. On comprend ainsi qu'en phase de chargement du fluide dans le dispositif de nettoyage 3, le piston mobile 8 se déplace à l'opposé de la chambre d'admission 20 puis effectue un trajet inverse de rappel à l'issue de la phase de nettoyage par éjection du fluide.

Le piston mobile 8 et/ou la tige 14, ici le piston mobile 8, sont configurés pour comporter des canaux de passage 58 qui autorisent l'écoulement de fluide de nettoyage à l'intérieur du piston mobile depuis la chambre d'admission 20, dont le volume variable est défini en fonction de la position du piston mobile 8 relativement à la bride d'entrée 12. Les canaux de passage 58 sont formés chacun par une rainure ménagée ici dans la paroi intérieure du piston mobile 8 délimitant le conduit intérieur de distribution 50. On comprend que lors du coulissement relatif du piston mobile 8 par rapport à la tige 14, le fluide est bloqué dans les canaux de passage tant que le joint torique d'étanchéité 36 ménagé dans l'embout 30 de la tige 14 se trouve en aval de l'extrémité de ces canaux de passage (tel que visible sur la figure 3), et que le fluide peut s'échapper des canaux de passage vers l'élément de distribution 4 lorsqu'au moins une extrémité des canaux de passage se retrouve au-delà du joint torique d'étanchéité 36.

Les canaux de passage 58 peuvent présenter des dimensions axiales et/ou des radiales différentes de manière à pouvoir piloter l'arrivée progressive de fluide dans l'élément de distribution 4. Par l'expression « dimension axiale », on entend la hauteur d'un canal de passage 58, dans la direction de l'axe longitudinal X d'allongement du piston mobile 8 tandis que par « dimension radiale », on entend parler de profondeur dudit canal de passage 58, dans l'épaisseur de la paroi intérieure du piston mobile 8 dans laquelle les canaux de passage 58 peuvent être ménagés.

Les figures 4 et 5 illustrent plus en détail la tige cylindrique 14 du dispositif de nettoyage télescopique selon l'invention qui s'étend, le long de l'axe d'allongement X, en saillie de la bride d'entrée 12 et qui comporte le dispositif chauffant 22 constitué de l'élément chauffant 24 et du tube conducteur de chaleur 26.

Le tube conducteur de chaleur entoure l'élément chauffant 24 et ils s'étendent le long de l'axe d'allongement X dans une position centrée par rapport à la bride d'entrée 12.

L'élément chauffant 24 s'étend à l'intérieur du tube conducteur de chaleur 26 depuis la bride d'entrée 12 jusqu'à l'embout 30 disposé à l'extrémité du tube conducteur de chaleur 26.

Dans l'exemple illustré, le fil résistif formant l'élément chauffant 24 présente au niveau de l'embout 30, et donc au voisinage de l'extrémité aval de la tige cylindrique, une forme de boucle de manière à présenter deux brins s'étendant côte à côte, traversant respectivement la bride d'entrée au niveau de l'orifice de passage 28 (visible sur la figure 3, sur laquelle un seul des brins de l'élément chauffant est visible du fait de la coupe). La dimension de l'orifice de passage 28 est supérieur à la dimension des brins de l'élément chauffant 24 plaqués l'un contre l'autre.

De la sorte, l'élément chauffant présente une forme de U avec la base ménagée au niveau de l'embout 30. Par ailleurs, l'embout 30 est ici muni d'une embase 31 destinée à être insérée, par exemple de force, dans le tube conducteur de chaleur 26, à l'extrémité aval de celui-ci, et cette embase comporte un oeillet configuré pour être traversé par l'élément chauffant au niveau de sa boucle. On comprend que lors du montage, l'extrémité de l'élément chauffant est passé dans l'oeillet formant orifice de maintien 32, et l'élément chauffant est replié autour de cet oeillet pour former la boucle.

Un matériau de remplissage, de type résine ou gel, est injecté à l'intérieur du tube conducteur de chaleur, par l'orifice de passage 28, une fois l'élément chauffant 24 en place à l'intérieur du tube 26. Ce matériau de remplissage s'étend dans le tube depuis l'embase de l'embout 30 jusqu'à la bride d'entrée, en débordant le cas échéant de l'orifice de passage 28 pour s'étaler sur la face externe de la bride d'entrée. De la sorte, on assure d'une part l'étanchéité entre la bride d'entrée 12, l'orifice de passage 28 par lequel entre et sort l'élément chauffant 24, et l'intérieur du tube conducteur de chaleur 26, et on fige d'autre part la position de l'élément chauffant à l'intérieur du tube conducteur de chaleur afin d'éviter qu'ils ne débattent lors du fonctionnement.

On va maintenant décrire un procédé de montage du dispositif chauffant équipant le dispositif de nettoyage selon l'invention. Selon un mode de réalisation préféré, le tube conducteur de chaleur 26 est surmoulé sur la bride d'entrée 12, réalisée par ailleurs en matière plastique. Lors de ce surmoulage, le tube conducteur de chaleur est agencé en saillie de la bride d'entrée autour de l'orifice de passage 28.

Un fil résistif formant ici l'élément chauffant 24 est ensuite inséré dans la bride d'entrée 12 par l'orifice de passage 28 puis tiré, suivant une première trajectoire aller, le long de l'axe d'allongement X à l'intérieur du tube conducteur de chaleur 26. Lorsque l'extrémité de l'élément dépasse de l'extrémité aval du tube conducteur de chaleur 26, l'extrémité de l'élément chauffant est passée à travers l'orifice de maintien 32 de l'embout 30 pour former une boucle et être de nouveau logé dans le tube conducteur de chaleur 26. L'élément chauffant est ensuite coulissé le long du tube, suivant une seconde trajectoire retour parallèle à la première, jusqu'à traverser de nouveau la bride d'entrée 12 au niveau de l'orifice de passage 28. L'agencement de l'ensemble à ce stade du procédé de montage est illustré sur la figure 4. L'embout 30 est ensuite rendu solidaire du tube conducteur de chaleur 26 par sertissage ou vissage ou emmanchement, et l'élément chauffant est tendu à l'extrémité opposé au niveau de sa connectique ici non représenté, tel que cela est illustré sur la figure 5.

On comprend que l'élément chauffant 24, relié électriquement à une alimentation électrique par l'intermédiaire d'un connecteur (non visible), est apte à chauffer le tube conducteur de chaleur 26 composé d'une matière conductrice de chaleur, de préférence du laiton ou de l'aluminium.

Lorsqu'une fonction de nettoyage d'une surface optique est demandée, et que du liquide nettoyage travers le corps creux d'acheminement 5 entre la tige 14 et le piston mobile 8, tel que cela a pu être précisé précédemment, il peut être activé automatiquement, sur demande de l'utilisateur, ou encore suite à la détection de conditions météorologiques spécifiques, une opération de chauffage du liquide de nettoyage par l'intermédiaire du dispositif chauffant intégré dans la tige 14.

La tige cylindrique 14, équipée du dispositif chauffant 22, a ainsi pour fonction, outre sa fonction de guidage du piston mobile et sa fonction de pilotage de la quantité de liquide de nettoyage passant vers l'élément de distribution, une fonction de chauffage, par conduction, du fluide qui pénètre dans le dispositif de nettoyage 3 par un embout d'admission 10 de la bride d'entrée 12 et qui s'écoule le long de la paroi extérieure de tige cylindrique 14.

Dans le mode de réalisation illustré, le tube conducteur de chaleur 26 a pour fonction de répartir de façon homogène la chaleur à transmettre au passage du fluide, et elle permet de maintenir l'élément chauffant 24 en position, le cas échéant avec l'aide de l'embout 30 et du matériau de remplissage.

Les figures 6a, 6b et 6c illustrent l'élément de distribution 4 du dispositif de nettoyage 3 selon l'invention constitué, selon un mode de réalisation préféré de l'invention, d'une rampe de distribution 4 comportant un dispositif chauffant additionnel 60 intégré. La rampe de distribution 4 s'étend sensiblement symétriquement de part et d'autre de l'axe d'allongement X du corps creux d'acheminement 5. Plus précisément, la rampe de distribution 4 comporte, à l'opposé de sa portion d'extrémité 45 par laquelle elle se rattache au corps creux d'acheminement 5, une portion de distribution 62 qui s'étend sensiblement symétriquement, selon une direction transversale Y sensiblement perpendiculaire à l'axe d'allongement X, de part et d'autre de l'extrémité aval du corps d'acheminement 5 et dudit axe d'allongement X. La portion de distribution 62 est formée d'une embase 64 formant une première partie prolongeant la rampe de distribution 4 et apte à être assemblée, de préférence par soudage, à une seconde partie formant couvercle 66 de manière à définir entre ces deux parties le canal de distribution de fluide 56 comportant en partie basse une pluralité d'orifices de distribution 68 de fluide pour l'éjection de celui-ci vers la surface optique à nettoyer lorsque l'élément de distribution 4 est en position déployée.

La rampe de distribution 4 est ici spécifique en ce qu'elle comporte un dispositif chauffant additionnel 60 intégré dans la rampe et indépendant du dispositif chauffant 22 présent dans la tige 14 tel qu'il a été décrit précédemment.

Le dispositif chauffant additionnel 60 comporte ici un fil chauffant additionnel 70, distinct de l'élément chauffant 24 logé dans le tube 26 de la tige 14, et relié électriquement à une alimentation électrique par l'intermédiaire d'un connecteur ici non représenté.

On comprend que le fil chauffant additionnel 70 comporte une partie interne à la rampe de distribution 4, et une partie externe à la rampe susceptible d'être relié au connecteur. Un orifice de passage 72, réalisé dans l'embase 64, permet de relier ces deux parties du fil chauffant additionnel, en permettant le passage du fil chauffant additionnel 70 à travers l'embase. Le diamètre de l'orifice de passage 64 est supérieur au diamètre externe du fil chauffant additionnel.

Comme illustré sur la figure 6b, la partie interne à la rampe du fil chauffant additionnel 70 court le long du canal de distribution de fluide 56, en étant maintenu sur la face interne de l'embase 64 de la portion de distribution 62, c'est-à-dire la face de l'embase tournée vers le couvercle 66, par l'intermédiaire d'une pluralité de plots de maintien 74 agencés sur cette face interne de l'embase.

La longueur de la partie interne du fil chauffant additionnel 70 est définie en fonction de la longueur du canal de distribution de fluide 56, et la longueur de la partie externe du fil chauffant additionnel est définie de manière à permettre le déplacement du piston mobile 8 du dispositif de nettoyage télescopique 3 dans sa position extrême déployée. On pourra prévoir de disposer la partie externe du fil chauffant additionnel dans un fourreau afin qu'il ne s'emmêle pas lorsque l'élément de distribution passe dans la position rétractée.

Conformément à ce qui a été décrit précédemment pour l'élément chauffant 24 et la tige 14, un matériau de remplissage, de type résine ou gel, peut être ajouté dans l'orifice de passage 72 pour assurer l'étanchéité entre la portion de distribution 62, l'orifice de passage 72 et le fil chauffant additionnel 70.

On comprend que le dispositif de nettoyage selon un aspect de l'invention comporte au moins un dispositif chauffant ménagé dans le corps creux d'acheminement et plus particulièrement dans la tige autour duquel coulisse le piston mobile pour le déploiement télescopique de l'élément distribution porté en bout de ce corps creux d'acheminement. On pourra de façon additionnelle prévoir un premier dispositif chauffant additionnel tel qu'il vient d'être décrit au niveau de l'élément de distribution, et on pourra, alternativement ou cumulativement à ce premier dispositif chauffant additionnel, prévoir de disposer un deuxième dispositif chauffant additionnel dans un conduit d'acheminement de fluide de nettoyage et/ou de séchage disposé en amont du dispositif de nettoyage chauffant 3 selon l'invention pour son alimentation en fluide, le deuxième dispositif chauffant additionnel prenant la forme d'un fil résistif relié à un connecteur et agencé dans ou sur le pourtour du conduit d'acheminement. Il est dès lors possible de piloter la mise en oeuvre de l'un et/ou l'autre des dispositifs chauffants pour s'adapter aux conditions météorologiques, sans avoir besoin de surdimensionner chacun de ces dispositifs chauffants. L'alimentation électrique nécessaire est ainsi quantifiée au plus juste, en mettant en oeuvre chacun des dispositifs chauffants dans les conditions de grand froid, et seulement le dispositif chauffant mélangé dans le corps creux d'acheminement lorsque les températures sont moins extrêmes.

La description qui précède explique clairement comment l'invention permet d'atteindre les objectifs qu'elle s'est fixée et notamment de proposer un dispositif de nettoyage télescopique compact et apte à améliorer le pouvoir nettoyant d'un fluide de nettoyage et/ou de séchage projeté sur une surface optique d'une capteur optique grâce à l'agencement d'au moins un dispositif chauffant, facile à mettre en oeuvre et à installer, dans ledit dispositif de nettoyage.

## Revendications

1. Dispositif de nettoyage télescopique (3) destiné à projeter au moins un fluide de nettoyage et/ou de séchage vers une surface vitrée à nettoyer d'un véhicule automobile (1), telle qu'une surface optique (2') d'un capteur optique (2) d'un système de détection optique, comprenant au moins un corps creux d'acheminement (5) de fluide de nettoyage, fermé à une extrémité amont par une bride d'entrée (12) et logeant un piston mobile (8) configuré pour coulisser dans le corps creux d'acheminement (5), parallèlement à un axe d'allongement (X) du corps creux, le piston mobile (8), creusé par un conduit intérieur de distribution (50), étant porteur à une extrémité aval d'un élément de distribution (4) de fluide, le corps creux d'acheminement (5) loge en outre une tige (14) qui s'étend en saillie de la bride d'entrée (12) le long de l'axe d'allongement (X) et autour de laquelle est apte à coulisser le piston mobile, le piston mobile (8) et la tige (14) étant configurés pour permettre entre eux, en fonction de la position du piston mobile (8) par rapport à la tige (14), l'écoulement du fluide depuis la bride d'entrée (12) jusqu'à l'élément de distribution (4), et dans lequel la tige (14) comporte un dispositif chauffant (22), ledit dispositif chauffant (22) comportant au moins un élément chauffant (24) s'étendant à l'intérieur d'un tube conducteur de chaleur (26), le long de l'axe d'allongement (X).

2. Dispositif de nettoyage télescopique (3) selon la revendication 1, **caractérisé en ce que** le tube conducteur de chaleur (26) définit une enveloppe extérieure de la tige (14), le fluide s'écoulant entre la tige (14) et le piston mobile (8) étant amené à s'écouler contre la paroi extérieure du tube conducteur de chaleur.

3. Dispositif de nettoyage télescopique (3) selon la revendication 1 ou 2, **caractérisé en ce que** l'élément chauffant (24) s'étend à l'intérieur de la tige depuis la bride d'entrée (12) et/ou jusqu'à l'extrémité libre de la tige (14) opposée à la bride d'entrée (12).

4. Dispositif de nettoyage télescopique (3) selon l'une quelconque des revendications précédentes, **caractérisé en ce que** l'élément chauffant (24) est un fil résistif.

5. Dispositif de nettoyage télescopique (3) selon la revendication précédente, **caractérisé en ce que** l'élément chauffant (24) est un fil résistif qui forme une boucle à l'intérieur du tube conducteur de chaleur (26).

6. Dispositif de nettoyage télescopique (3) selon l'une des revendications précédentes, **caractérisé en ce que** la tige (14) comporte, un embout (30) sensiblement cylindrique qui comporte des moyens de maintien (32) de l'élément chauffant (24).

7. Dispositif de nettoyage télescopique (3) selon la revendication précédente, **caractérisé en ce que** l'embout (30) est rendu solidaire d'une extrémité aval du tube conducteur de chaleur (26) par sertissage ou vissage ou emmanchement.

8. Dispositif de nettoyage télescopique (3) selon l'une des revendications précédentes, **caractérisé en ce qu'**un matériau de remplissage, notamment de type résine ou gel, est disposé au moins partiellement à l'intérieur du tube conducteur (26) pour figer la position de l'élément chauffant (24).

9. Dispositif de nettoyage télescopique (3) selon l'une des revendications précédentes, **caractérisé en ce que** le tube conducteur de chaleur (26) est métallique, notamment en laiton ou en aluminium.

10. Dispositif de nettoyage télescopique (3) selon l'une des revendications précédentes, en combinaison avec la revendication 6, **caractérisé en ce que** l'embout (30) est en matière plastique.

11. Dispositif de nettoyage télescopique (3) selon l'une des revendications précédentes, **caractérisé en ce que** l'élément de distribution (4) de fluide comporte une rampe de distribution équipée d'un dispositif chauffant additionnel (60) comportant un fil chauffant additionnel (70) distinct de l'élément chauffant (24) logé dans la tige (14).

12. Système de détection optique destiné à équiper un véhicule automobile, ledit système comportant au moins un capteur optique (2) muni d'une surface optique (2'), **caractérisé en ce qu'**il comporte un dispositif de nettoyage télescopique (3) de la surface optique (2') selon l'une des revendications 1 à 11.

## Patentansprüche

1. Teleskopische Reinigungsvorrichtung (3), welche dazu bestimmt ist, mindestens ein Reinigungs- und/oder Trocknungsfluid auf eine zu reinigende Glasfläche eines Kraftfahrzeugs (1), wie etwa eine optische Fläche (2') eines optischen Sensors (2) eines optischen Detektionssystems, zu sprühen, und mindestens einen Führungshohlkörper (5) für Reinigungsfluid umfasst, der an einem stromaufwärtigen Ende durch einen Eintrittsflansch (12) verschlossen ist und einen beweglichen Kolben (8) aufnimmt, der dafür ausgelegt ist, in dem Führungshohlkörper (5) parallel zu einer Längsachse (X) des Hohlkörpers zu gleiten, wobei der bewegliche Kolben (8), der von einem inneren Verteilungskanal (50) durchquert wird, an einem stromabwärtigen Ende ein Fluidverteilungselement (4) trägt,
wobei der Führungshohlkörper (5) außerdem eine Stange (14) aufnimmt, die sich aus dem Eintrittsflansch (12) vorstehend entlang der Längsachse (X) erstreckt und um die herum der bewegliche Kolben gleiten kann, wobei der bewegliche Kolben (8) und die Stange (14) dafür ausgelegt sind, zwischen sich, in Abhängigkeit von der Position des beweglichen Kolbens (8) bezüglich der Stange (14), das Fließen des Fluids vom Eintrittsflansch (12) bis zum Verteilungselement (4) zu ermöglichen,
und wobei die Stange (14) eine Heizvorrichtung (22) aufweist, wobei die Heizvorrichtung (22) mindestens ein Heizelement (24) aufweist, das sich im Inneren eines wärmeleitenden Rohres (26) entlang der Längsachse (X) erstreckt.

2. Teleskopische Reinigungsvorrichtung (3) nach Anspruch 1, **dadurch gekennzeichnet, dass** das wärmeleitende Rohr (26) eine äußere Hülle der Stange (14) definiert, wobei bewirkt wird, dass das zwischen der Stange (14) und dem beweglichen Kolben (8) strömende Fluid die Außenwand des wärmeleitenden Rohres anströmt.

3. Teleskopische Reinigungsvorrichtung (3) nach Anspruch 1 oder 2, **dadurch gekennzeichnet, dass** sich das Heizelement (24) im Inneren der Stange vom Eintrittsflansch (12) aus und/oder bis zum dem Eintrittsflansch (12) gegenüberliegenden freien Ende der Stange (14) erstreckt.

4. Teleskopische Reinigungsvorrichtung (3) nach einem der vorhergehenden Ansprüche, **dadurch gekennzeichnet, dass** das Heizelement (24) ein Widerstandsdraht ist.

5. Teleskopische Reinigungsvorrichtung (3) nach dem vorhergehenden Anspruch, **dadurch gekennzeichnet, dass** das Heizelement (24) ein Widerstandsdraht ist, der eine Schleife im Inneren des wärmeleitenden Rohres (26) bildet.

6. Teleskopische Reinigungsvorrichtung (3) nach einem der vorhergehenden Ansprüche, **dadurch gekennzeichnet, dass** die Stange (14) ein im Wesentlichen zylindrisches Endstück (30) aufweist, welches Haltemittel (32) für das Heizelement (24) aufweist.

7. Teleskopische Reinigungsvorrichtung (3) nach dem vorhergehenden Anspruch, **dadurch gekennzeichnet, dass** das Endstück (30) durch Quetschverbindung oder Verschraubung oder Aufstecken fest mit einem stromabwärtigen Ende des wärmeleitenden Rohres (26) verbunden ist.

8. Teleskopische Reinigungsvorrichtung (3) nach einem der vorhergehenden Ansprüche, **dadurch gekennzeichnet, dass** ein Füllmaterial, insbesondere von der Art eines Harzes oder Gels, wenigstens teilweise im Inneren des leitenden Rohres (26) angeordnet ist, um die Position des Heizelements (24) zu fixieren.

9. Teleskopische Reinigungsvorrichtung (3) nach einem der vorhergehenden Ansprüche, **dadurch gekennzeichnet, dass** das wärmeleitende Rohr (26) metallisch ist, insbesondere aus Messing oder Aluminium besteht.

10. Teleskopische Reinigungsvorrichtung (3) nach einem der vorhergehenden Ansprüche in Verbindung mit Anspruch 6, **dadurch gekennzeichnet, dass** das Endstück (30) aus Kunststoff besteht.

11. Teleskopische Reinigungsvorrichtung (3) nach einem der vorhergehenden Ansprüche, **dadurch gekennzeichnet, dass** das Fluidverteilungselement (4) ein Verteilergestell aufweist, das mit einer zusätzlichen Heizvorrichtung (60) ausgestattet ist, welche einen zusätzlichen Heizdraht (70) aufweist, der von dem in der Stange (14) aufgenommenen Heizelement (24) verschieden ist.

12. Optisches Detektionssystem, welches zur Ausrüstung eines Kraftfahrzeugs bestimmt ist, wobei das System mindestens einen mit einer optischen Fläche (2') ausgestatteten optischen Sensor (2) aufweist, **dadurch gekennzeichnet, dass** es eine teleskopische Reinigungsvorrichtung (3) für die optische Fläche (2') nach einem der Ansprüche 1 bis 11 aufweist.

## Claims

1. Telescopic cleaning device (3) intended to spray at least one cleaning and/or drying fluid towards a glass surface to be cleaned of a motor vehicle (1), such as an optical surface (2') of an optical sensor (2) of an optical detection system, comprising at least one hollow conveying body (5) for cleaning fluid, closed at an upstream end by an inlet flange (12) and accommodating a movable piston (8) configured so as to slide in the hollow conveying body (5), parallel to an axis of elongation (X) of the hollow body, the movable piston (8), hollowed out by an inner distribution conduit (50), bearing a fluid distribution element (4) at a downstream end,
the hollow conveying body (5) additionally accommodates a rod (14) which extends jutting out from the inlet flange (12) along the axis of elongation (X) and around which the movable piston is capable of sliding, the movable piston (8) and the rod (14) being configured so as to allow the fluid to flow between them, depending on the position of the movable piston (8) with respect to the rod (14), from the inlet flange (12) to the distribution element (4),
and wherein the rod (14) has a heating device (22), said heating device (22) having at least one heating element (24) extending inside a heat conducting tube (26), along the axis of elongation (X).

2. Telescopic cleaning device (3) according to Claim 1, **characterized in that** the heat conducting tube (26) defines an outer casing of the rod (14), the fluid flowing between the rod (14) and the movable piston (8) being made to flow against the outer wall of the heat conducting tube.

3. Telescopic cleaning device (3) according to Claim 1 or 2, **characterized in that** the heating element (24) extends inside the rod from the inlet flange (12) and/or up to the free end of the rod (14) opposite the inlet flange (12).

4. Telescopic cleaning device (3) according to any one of the preceding claims, **characterized in that** the heating element (24) is a resistive wire.

5. Telescopic cleaning device (3) according to the preceding claim, **characterized in that** the heating element (24) is a resistive wire which forms a loop inside the heat conducting tube (26).

6. Telescopic cleaning device (3) according to one of the preceding claims, **characterized in that** the rod (14) has an essentially cylindrical nozzle (30) which has means (32) for holding the heating element (24).

7. Telescopic cleaning device (3) according to the preceding claim, **characterized in that** the nozzle (30) is secured to a downstream end of the heat conducting tube (26) by crimping or screwing or fitting.

8. Telescopic cleaning device (3) according to one of the preceding claims, **characterized in that** a filling material, notably of resin or gel type, is disposed at least partially inside the heat conducting tube (26) in order to fix the position of the heating element (24).

9. Telescopic cleaning device (3) according to one of the preceding claims, **characterized in that** the heat conducting tube (26) is metallic, notably made of brass or aluminium.

10. Telescopic cleaning device (3) according to one of the preceding claims, in combination with Claim 6, **characterized in that** the nozzle (30) is made of plastic material.

11. Telescopic cleaning device (3) according to one of the preceding claims, **characterized in that** the fluid distribution element (4) has a distribution bar fitted with an additional heating device (60) having an additional heating wire (70) separate from the heating element (24) accommodated in the rod (14).

12. Optical detection system intended to be fitted in a motor vehicle, said system having at least one optical sensor (2) provided with an optical surface (2'), **characterized in that** it has a telescopic cleaning device (3) for the optical surface (2') according to one of Claims 1 to 11.
